# EUROPEAN PATENT APPLICATION

(11) **EP 4 629 380 A1**
(43) Date of publication of application: **08.10.2025**
(21) Application number: 25164280.7
(22) Date of filing: 18.03.2025
(51) Int. Cl.: H01M 10/0525, H01M 10/0565

(54) **OXIDE SOLID ELECTROLYTE MEMBRANE CARRIER AND PREPARATION METHOD THEREOF**

(30) Priority: 18.03.2024 CN 202410304046
(71) Applicant: Hon Hai Precision Industry Co., Ltd., New Taipei 236 (TW); SolidEdge Solution Inc., Hsinchu 300 (TW)
(72) Inventor: CHEN, Wen-Chung, 30078 Hsinchu City 300 (TW); KAO, Jing-Kai, 30078 Hsinchu City 300 (TW); CHANG, Tseng-Lung, 30078 Hsinchu City 300 (TW)
(74) Representative: Metida

(57) **Abstract**

An oxide solid electrolyte membrane carrier comprises a substrate, a first coating and a second coating. The first coating is coated on a surface of the substrate, the second coating is coated on a surface of the first coating. The first coating is a binder layer. The second coating is a resin layer.

## Description

### FIELD

The present disclosure relates to field of solid electrolytes, and in particular to an oxide solid electrolyte membrane carrier and a preparation method thereof.

### BACKGROUND

Compared with traditional liquid lithium-ion batteries, all-solid-state lithium-ion batteries have excellent safety performance, high energy density, good cycle performance, etc., and have received a lot of attention in recent years. As a core material in all-solid-state batteries, solid electrolytes directly determine the performance of all-solid-state batteries. Oxide solid electrolytes have high ionic conductivity, wide electrochemical window, high mechanical strength, and are stable in air and metal lithium, and are very potential candidate material as solid electrolytes.

However, during preparation of oxide solid electrolyte membranes, after the oxide solid electrolyte is dispersed in the formula colloid, cohesive forces remain in the oxide solid electrolyte. When the oxide solid electrolyte is coated on an existing carrier, it is very easy to produce macroscopic changes such as overflow and cohesion, and it is very difficult to form a high-quality membrane as an effective coating on the carrier, since the oxide solid electrolyte membrane may shrinkage, warping, peeling, etc.. Moreover, a surface energy of the existing carrier and the oxide electrolyte membrane does not match, which makes the oxide electrolyte membrane on the carrier difficult to be torn off from the carrier, and may cause structural damage to the solid electrolyte membrane body when it is torn off.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as the limiting the scope. For one of ordinary skill in the art, other related drawings can also be obtained from these drawings without any creative work.

Implementations of the present technology will now be described, by way of embodiments, with reference to the attached figures, wherein:
FIG. 1 is a schematic diagram of a structure of an oxide solid electrolyte membrane carrier provided in an embodiment of the present disclosure.
FIG. 2 is a photograph of a lithium lanthanum zirconium oxide solid electrolyte coated on a carrier surface in Example 1 of the present disclosure.
FIG. 3 is a photograph of the lithium lanthanum zirconium oxide solid electrolyte coated on a carrier surface in Example 2 of the present disclosure.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated to better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

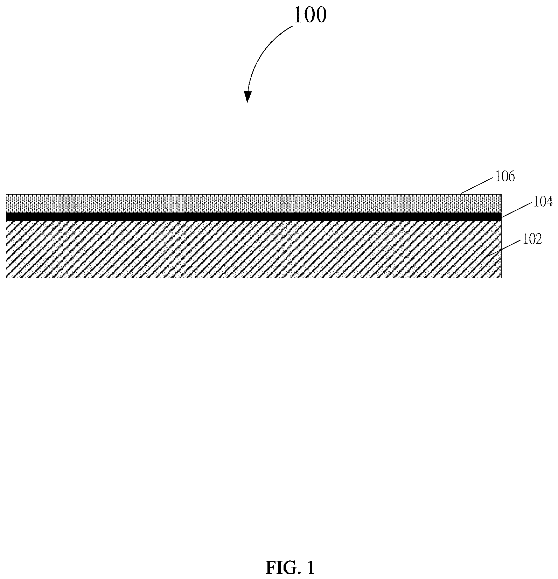

Referring to FIG. 1, an oxide solid electrolyte carrier 100 (hereinafter referred to as a carrier 100) for carrying an oxide solid electrolyte membrane is provided according to one embodiment of the present disclosure. The carrier 100 comprises a substrate 102, a first coating 104 and a second coating 106. The first coating 104 is coated on a surface of the substrate 102, the second coating 106 is coated on a surface of the first coating 104. The first coating 104 is located between the substrate 102 and the second coating 106.

A material of the substrate 102 is that is resistant to high temperatures and has a low shrinkage rate at high temperatures, such as polyethylene terephthalate (PET), polyimide (PI), polypropylene (PP), propylene oxide (PO), triacetyl cellulose (TAC), cycloolefin polymer (COP), etc. Preferably, after the substrate 102 is kept at a temperature greater than or equal to 160° C. for 10 minutes, a thermal shrinkage rate in a longitudinal direction (MD) and a thermal shrinkage rate in a transverse direction (TD) are both less than 0.5. A thickness of the substrate 102 is in a range from 120 µm to 130 µm. The substrate 102 has good mechanical properties. Preferably, the longitudinal tensile strength MD of the substrate 102 is greater than 18 N/m², and the transverse tensile strength TD is greater than 23.5 N/m².

A friction coefficient of the substrate 102 is preferably greater than 0.4 µs. A wetness index of an outer surface of the substrate 102 is preferably greater than 55, and the wetness index of an inner surface is preferably less than 42, wherein the outer surface refers to the surface of the substrate 102 that is not in contact with the first coating 104, and the inner surface refers to the surface of the substrate 102 that is in contact with the first coating 104.

In one embodiment, the substrate 102 is a PET sheet with a thickness of 125µm, a tensile strength MD> 18 N/m², and TD>23.5 N/m²; the friction coefficient is greater than 0.4µs; the transverse and longitudinal heat shrinkage rates are both less than 0.5; the outer surface wetness index is greater than 55; and the inner surface wetness index is less than 42.

The first coating 104 is a bonding layer, which is used to increase the bonding force between the substrate 104 and the second coating 106. The thickness of the first coating is preferably but not limited to a range from 0.5 µm to 2 µm.

Preferably, the first coating 104 is a functionalized bonding layer. More preferably, the first coating 104 is a polyethyleneimine (PEI) functionalized bonding layer, which provides functionalized bite force, and appropriately combines the substrate 102 with the second coating 106, so that the carrier 100 exhibits a characteristic surface energy, and the surface energy matches the oxide solid electrolyte, so that the oxide solid electrolyte colloid is effectively coated and bite on the surface of the carrier 100, and forms an oxide solid electrolyte film on the surface of the carrier 100 through a series of baking procedures, and the oxide solid electrolyte film can be effectively attached to the carrier 100.

In one embodiment, the first coating 104 is a polyethyleneimine (PEI) layer, a polymerization degree of PEI is ranged from 90 to 110, and the monomer molecular weight is 43; and the thickness of the first coating 104 is 1µm.

A thickness of the second coating 106 is preferably but not limited to a range from 10 µm to 12 µm.

The second coating 106 is a resin layer. Preferably, the second coating is a silicone grafted resin layer. A mass ratio of silicon in the silicone grafted resin layer is preferably ranged from 1% to 3%. More preferably, the second coating is a silicone grafted acrylic resin (methyl acrylate). In one embodiment, the second coating 106 is a polysiloxane grafted acrylic resin.

In one embodiment, the carrier 100 is an oxide ceramic solid electrolyte membrane. For example, the oxide ceramic solid electrolyte membrane can be a solid electrolyte membrane, such as lithium lanthanum zirconium oxide (LLZO) solid electrolyte membrane, lithium aluminum titanium phosphate (LATP) solid electrolyte membrane, lithium aluminum germanium phosphate (LAGP) solid electrolyte membrane, and lanthanum lithium titanate (LLTO) solid electrolyte membrane.

The following takes the LLZO solid electrolyte membrane as an example to illustrate the carrier 100 of the present disclosure through specific embodiments and comparative examples.

### Example 1 (1#):

In one embodiment, the oxide solid electrolyte is a lithium lanthanum zirconium oxide (LLZO) solid electrolyte gel. The mass proportion of LLZO particles in the LLZO solid electrolyte gel is in a range from 5% to 45%, and the cumulative particle size distribution percentage of the LLZO particles is D50<50nm; D90<200nm. The LLZO solid electrolyte gel contains a polymer, which is a mixture of PVDF₁, PVDF₂, PVDF₃, PMMA, and LiTFSI, wherein PVDF1 >200 million Da; PVDF₂> 1 million Da; PVDF₃>300,000 Da. In the polymer, the mass percentage of each component is 0-30% for PVDF₁; 0-30% for PVDF₂; 0-30% for PVDF₃; 0-10% for PMMA; and 0-25% for LiTFSI. The solvent in the LLZO solid electrolyte gel is: dimethylacetamide (DMAC): N-methylpyrrolidone (NMP): tetrahydrofuran (THF): butanone (MEK): toluene = (70~85): (1~10): (1~15): (1~7): (1~5).

In this embodiment, the substrate 102 in the carrier 100 is a PET sheet with a thickness of 125µm, a tensile strength MD is greater than 18 N/m², TD is greater than 13 N/m²; a friction coefficient is greater than 0.4µs; a transverse and longitudinal thermal shrinkage rate of less than 0.5; an outer surface wetness index is greater than 55; an inner surface wetness index is less than 42. The first coating 104 is polyethyleneimine (PEI), the degree of polymerization of PEI is about 90∼110, and the monomer molecular weight is 43; a thickness of the adhesive layer is 1µm. The second coating 106 is a polysiloxane-grafted acrylic resin, wherein a mass percentage of silicon in the polysiloxane-grafted acrylic resin is about 1%.

The LLZO solid electrolyte gel is coated on the surface of the carrier 100 and then dried, wherein the drying temperature is 160°C and the drying time is 10 minutes, to obtain an LLZO solid electrolyte membrane adhered to the surface of the carrier 100.

### Example 2 (2#):

This Example 2 is almost the same as Example 1, except that the mass percentage of silicon in the second coating 106 is 3%.

### Example 3 (3#):

This Example 3 is basically the same as Example 1, except that the mass percentage of silicon in the second coating 106 is 5%.

### Comparative Example 1 (1*):

The comparative Example 1 is basically the same as Example 1, except that the second coating 106 in the comparative example is a silica gel-grafted fluorine acrylic glue system, specifically perfluorooctyl triethoxy silane and propyl trimethoxy silane, wherein the mass percentage of fluorine is 0.4%.

### Comparative Example 2 (2*):

The comparative example is basically the same as comparative example 1, and the only difference is that the mass percentage of fluorine is 0.7%.

### Comparative Example 3 (3*):

The comparative example is basically the same as comparative example 1, and the only difference is that the mass percentage of fluorine is 0.8%.

### Comparative Example 4 (4*):

The comparative example is basically the same as comparative example 1, and the only difference is that the mass percentage of fluorine is 0.9%.

### Comparative Example 5 (5*):

The comparative example is basically the same as comparative example 1, and the only difference is that the mass percentage of fluorine is 1.0%.

### Comparative Example 6 (6*):

Comparative Example 6 is basically the same as Example 1, and the only difference is that the mass percentage of fluorine is 1.0%.

Comparative Example 6 is basically the same as Example 1, and the only difference is that the second coating 106 in the comparative example is a fluorine-grafted silica gel system, specifically silica gel grafted fluorine-perfluorooctyl triethoxy silane and propyl trimethoxy silane, and the mass percentage of fluorine is 1.0%.

The table shows the performance of the carriers with LLZO solid electrolytes obtained in Examples 1-3 and Comparative Examples 1-6 under the same experimental conditions, respectively tested:

| interface | Acrylic adhesive (silicon- fluorine ) | | | | | Silicone series (fluorine) | Acrylic adhesive (silicon) | | |
|---|---|---|---|---|---|---|---|---|---|
| | 1* | 2* | 3* | 4* | 5* | 6* | 1# | 2# | 3# |
| | Mass percentage | | | | | | | | |
| | Fluorine 0.4% | Fluorine 7% | Fluorine 8% | Fluorine 9% | Fluorine 1.0% | Fluorine 0% | Silicon 1% | Silicon 3% | Silicon 5% |
| Coating thickness (µm) | 10-12 | 10-12 | 10-12 | 10-12 | 10-12 | 10-12 | 10-12 | 10-12 | 10-12 |
| PET thickness (µm) | 125 | 125 | 125 | 125 | 125 | 125 | 125 | 125 | 125 |
| Coating appearance | Cohesio n | Cohesion | Cohesion | Cohesion | Cohesion | Cohesion | No cohesion | No cohesion | Cohesio n |
| Flatness 160°C , 10min | Warpin g 10mm | Warping 7mm | Warping | Warping 13mm | Curl | Warping 25mm | better <3mm | better <3mm | better <3mm |
| Dry peeling | better | better | Poor | Poor | Poor | Poor | better | better | better |
| Water contact angle (degrees) | 105 | 108 | 110 | 112 | 112 | 115 | 90 | 108 | 108 |
| Oil contact angle (degrees) | 34 | 36 | 36 | 36 | 38 | 42 | 15 | 20 | twenty two |
| Surface energy dyne value dany | <30 | <30 | <30 | <30 | <30 | <30 | 32-34 | <32 | <32 |
| Adhesion g/in | | | | | | | >100 | >30 | >30 |

It can be seen from the above table that the performance of the carrier 100 in Examples 1-3 is better than that of the carrier in Comparative Examples 1-6. It means that when the second coating 106 is a polysiloxane-grafted acrylic resin, the performance of the carrier 100 is better, for example, the coating appearance has no cohesion, good flatness, easier peeling, greater adhesion, etc. From the results of Examples 1-3, it can also be seen that when the mass proportion of polysiloxane is 1%, the effect is best; when the mass proportion of poly siloxane increases to 5%, the performance is reduced. Preferably, when the second coating 106 is a silicone-grafted acrylic resin layer, the mass proportion of silicon in the silicone-grafted acrylic resin layer is ranged from 1% to 3%.

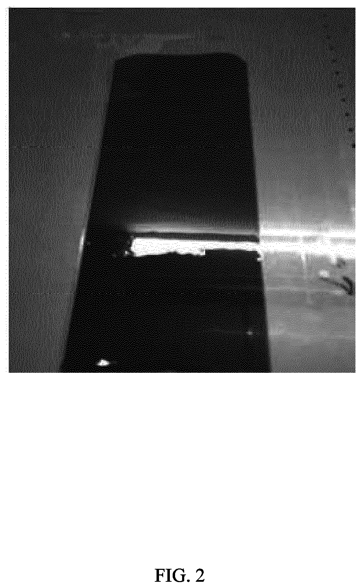

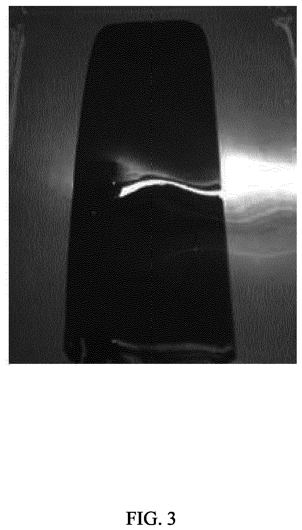

Please refer to FIGS. 2-3, which are photos of the LLZO solid electrolyte coated on the carrier surface in Examples 1 and 2, respectively. It can be seen from the figure that the carrier does not produce edge shrinkage, and the LLZO solid electrolyte has good film-forming properties on the carrier surface.

The present disclosure also provides a method for preparing the oxide solid electrolyte carrier 100, comprising the following steps:
S1: providing the substrate 102, a binder and a resin material;
S2: applying the binder on the surface of the substrate 102, and baking to form the first coating 104; and
S3: applying the resin material to the surface of the first coating 104, and baking to form the second coating 106, thereby obtaining the oxide solid electrolyte carrier 100.

In step S1, the substrate 102 can be further surface treated to remove impurities on the surface of the substrate. The substrate 102 can withstand the baking temperature in steps S2 and S3, and when in use, the baking temperature after the surface of the carrier 100 is coated with the oxide solid electrolyte gel. Preferably, at the above baking temperature, the thermal shrinkage of the substrate 102 in the longitudinal direction (MD) and the transverse direction (TD) is less than 0.5.

In step S2, the binder is preferably a functionalized bonding layer. More preferably, the adhesive is a polyethylene (PE) functionalized adhesive layer, and the PE functionalized adhesive layer provides functionalized bite force, appropriately combines the substrate 102 with the second coating 106, so that the solid electrolyte carrier 100 exhibits a characteristic surface energy.

In the step, the baking temperature can be selected according to the type of the adhesive. In this embodiment, the adhesive is polyethyleneimine (PEI), the degree of polymerization of PEI is about 90~110, the monomer molecular weight is 43, and the baking temperature is 120°C.

In step S3, the resin material is preferably a silicone grafted resin layer. More preferably, the resin material is a silicone grafted acrylic resin (methyl acrylate).

In the step, the baking temperature can be selected according to the type of the resin material. In this embodiment, the resin material is a poly siloxane grafted acrylic resin, and the baking temperature is 150°C.

When in use, the oxide solid electrolyte gel is evenly coated on the surface of the second coating 106, and then baked to form an oxide solid electrolyte film on the surface of the carrier 100. In this embodiment, the oxide solid electrolyte is a nano-LLZO composite polymer colloid, wherein the solid content is greater than 30%, the particle size of LLZO is less than 100nm, the coating thickness is 20~80µm, and the baking temperature is 120∼180°C.

The oxide solid electrolyte carrier provided by the present disclosure comprises a substrate, a functionalized bonding layer and a silica gel grafted acrylic coating, the bonding layer provides a functionalized bite force, and the substrate and the acrylic coating are appropriately combined, so that the carrier exhibits a characteristic surface energy, and the surface energy matches the oxide solid electrolyte, so that the oxide solid electrolyte colloid is effectively coated and bitten on the surface of the oxide solid electrolyte carrier, and an oxide solid electrolyte film is formed on the surface of the carrier through a series of baking procedures. The oxide solid electrolyte membrane can be effectively attached to the carrier material, and experiments have shown that it will not cause problems such as shrinkage, warping, peeling, and baking beam marks; and when in use, the oxide solid electrolyte membrane can be easily torn off from the carrier material without causing structural damage to the oxide solid electrolyte membrane.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including, the full extent established by the broad general meaning of the terms used in the claims.

The above embodiments are only used to illustrate the technical solutions of the present application rather than limitations. Although the present application has been described in detail with reference to the above preferred embodiments, one of ordinary skill in the art should understand that the technical solutions of the present application may be modified or equivalently replaced without departing from the spirit and scope of the technical solutions of the present application.

## Claims

1. An oxide solid electrolyte membrane carrier, comprising a substrate, a first coating and a second coating, wherein the first coating is coated on a surface of the substrate, the second coating is coated on a surface of the first coating, the first coating is a binder layer, and the second coating is a resin layer.

2. The oxide solid electrolyte membrane carrier of claim 1, wherein a heat shrinkage rate of the substrate in the longitudinal direction (MD) and the transverse direction (TD) is less than 0.5 by keeping the substrate at a temperature greater than or equal to 160 °C for 10 minutes.

3. The oxide solid electrolyte membrane carrier of claim 1, wherein a material of the substrate is polyethylene terephthalate (PET), polyimide (PI), polypropylene (PP), propylene oxide (PO), triacetyl cellulose (TAC), or cycloolefin polymer (COP).

4. The oxide solid electrolyte membrane carrier of any one of claims 1-3, wherein a thickness of the substrate ranges from 120 µm to 130 µm.

5. The oxide solid electrolyte membrane carrier of any one of claims 1-3, wherein the first coating is a functionalized bonding layer.

6. The oxide solid electrolyte membrane carrier of claim 5, wherein the first coating is a polyethyleneimine (PEI) layer.

7. The oxide solid electrolyte membrane carrier of claim 5, wherein a thickness of the first coating is in a range from 0.5 µm to 2 µm.

8. The oxide solid electrolyte membrane carrier of any one of claims 1-3, wherein the second coating is a silica gel grafted resin layer.

9. The oxide solid electrolyte membrane carrier of claim 8, wherein the second coating is a silica gel grafted acrylic resin (methyl acrylate).

10. The oxide solid electrolyte membrane carrier of claim 8, wherein a thickness of the second coating is in a range from 10 µm to 12 µm.

11. The oxide solid electrolyte membrane carrier of claim 8, wherein a mass ratio of silicon in the silica gel grafted acrylic resin layer is in a range from 1 % to 3 %.

12. The oxide solid electrolyte membrane carrier of claim 8, wherein the second coating is a poly siloxane grafted acrylic resin.

13. A method to prepare an oxide solid electrolyte membrane carrier of claim 1, comprising:
S1: providing the substrate, a binder and a resin material;
S2: applying the binder on the surface of the substrate, and baking the binder to form the first coating; and
S3: applying the resin material to the surface of the first coating, and baking to form the second coating.

14. The method of claim 13, wherein in step S1, the substrate is baked at a temperature greater than or equal to 160 °C for 10 minutes.

15. The method of claim 14, wherein a heat shrinkage rate of the substrate in a longitudinal direction (MD) and a transverse direction (TD) is less than 0.5.
